**Europäisches Patentamt**

**European Patent Office**

**Office européen des brevets**

(19)

(11)   **EP 1 224 973 A1**

(12)   **EUROPEAN PATENT APPLICATION**
published in accordance with Art. 158(3) EPC

(43) Date of publication:
**24.07.2002   Bulletin 2002/30**

(51) Int Cl.⁷: **B01J 35/02**, B01D 53/86, B01D 53/94, B01J 19/24, B01J 19/08

(21) Application number: **00956954.2**

(22) Date of filing: **06.09.2000**

(86) International application number:
**PCT/JP00/06043**

(87) International publication number:
**WO 01/19515 (22.03.2001 Gazette 2001/12)**

(84) Designated Contracting States:
**AT BE CH CY DE DK ES FI FR GB GR IE IT LI LU MC NL PT SE**

(30) Priority: **09.09.1999   JP   25520599**
**12.10.1999   JP   28908799**
**12.10.1999   JP   28908899**

(71) Applicants:
• **Hitachi Zosen Corporation**
  **Osaka-shi, Osaka 559-8559 (JP)**
• **Mizuno, Akira**
  **Nagoya-shi, Aichi 460-0022 (JP)**

(72) Inventors:
• **MIZUNO, Akira**
  **Nagoya-shi, Aichi 460-0022 (JP)**

• **TANAKA, Saburo 10-34, Aza-Higashiura**
  **Aichi 441-8105 (JP)**
• **ICHIKI, Masayoshi Hitachi Zosen Corporation**
  **Osaka-shi, Osaka 559-8559 (JP)**
• **KONDO, Kazuhiro Hitachi Zosen Corporation**
  **Osaka-shi, Osaka 559-8559 (JP)**
• **FURUBAYASHI, Michitaka**
  **Hitachi Zosen Corporation**
  **Osaka-shi, Osaka 559-8559 (JP)**
• **HAMANO, Shuji Hitachi Zosen Corporation**
  **Osaka-shi, Osaka 559-8559 (JP)**

(74) Representative:
**TER MEER STEINMEISTER & PARTNER GbR**
**Patentanwälte,**
**Mauerkircherstrasse 45**
**81679 München (DE)**

(54)   **CATALYST WITH DISCHARGE ELECTRODE OR CARRIER**

(57)      An object of the invention is to provide a catalyst or catalyst carrier having a discharge electrode and effectively usable in a method of efficiently decomposing dioxins arid like harmful substances in exhaust gases by plasma discharge. The invention provides a catalyst or carrier having a discharge electrode and comprising a catalyst or carrier in the form of a plate or sheet, the electrode being provided on at least one surface of the catalyst or carrier plate or sheet and being in the form of dots, or a line or bar which may intersect itself. The catalyst or carrier plate or sheet includes a catalyst or carrier in the form of a cloth, board, paper or the like. Preferably, the electrode is one formed by applying an electrically conductive printing ink containing silver or like metal to at least one surface of the catalyst or carrier plate or sheet by printing, sintering a metal powder on the surface, or vapor-depositing or sputtering a metal onto the surface. The conductive ink may be a paste. Preferably the electrode is in the form of comb teeth.

Fig.2

205

120

2

3

**EP 1 224 973 A1**

**Description**

TECHNICAL FIELD

The present invention relates to catalysts or catalyst carriers having discharge electrodes, and to catalyst blocks having discharge electrodes and comprising catalyst members or catalyst carrier members having discharge electrodes and a photocatalyst interposed between the members and/or disposed externally thereof. The present invention further relates to a method of and an apparatus for decomposing by plasma discharge harmful substances such as dioxins in exhaust gases released from refuse incinerators, boilers, diesel engines, etc.

BACKGROUND ART

It is already known that photocatalysts have high oxidizing ability and are usable for decomposing dioxins by oxidation. In order to cause the photocatalyst to act effectively, however, the surfaces of catalyst particles must be irradiated with light quantum of specified frequency. With catalyst beds filled with a large number of catalyst particles within reactors, it is therefore difficult to irradiate the individual particles with sufficient light quantum and to cause the photocatalyst to act effectively.

Although it is possible to remove harmful substances from exhaust gases by utilizing the high oxidizing or reducing ability of photocatalysts, difficulty is encountered in uniformly irradiating the surface of the particulate catalyst with ultraviolet rays of high energy, it is impossible to fill limited space with a large quantity of catalyst, there is a need to use a reactor which is larger than for example, denitration reactors, predetermined activity is not available at the catalyst portion which is not fully irradiated with light, and the reactivity of the exhaust gas moving past through such portion is low. For this reason, it is likely that an overall high harmful substance removal efficiency will not be achieved.

To overcome the foregoing problems, a first object of the present invention is to provide a method of and an apparatus for efficiently decomposing dioxins and like harmful substances in an exhaust gas by plasma discharge.

A second object of the invention is to provide a catalyst or catalyst carrier having discharge electrodes or a catalyst block having discharge electrodes which is advantageous to use in the method of efficiently decomposing dioxins and like harmful substances in an exhaust gas by plasma discharge.

DISCLOSURE OF THE INVENTION

A first feature of the present invention relates to a catalyst or carrier having a discharge electrode.

The catalyst or carrier according to the first feature of the invention and having a discharge electrode comprises a catalyst or carrier in the form of a plate or sheet, the electrode being provided on at least one surface of the catalyst or carrfer plate or sheet and being in the form of dots, or a line or bar which may intersect itself.

The catalyst or carrier in the form of a plate or sheet includes one in the form of a cloth, board, paper or the like.

The electrode is formed on at least one surface of the platelike or sheetlike catalyst or carrier, preferably by applying an electrically conductive printing ink containing a metal such as silver, copper, or an alloy of solder components to the surface by printing, sintering a metal powder on the surface, or vapor-depositing or sputtering a metal onto the surface. The conductive ink may be in the form of a paste.

Preferably, the electrode is in the form of comb teeth. It is desirable that the comb-tooth electrode be formed on each of the front and rear surfaces of the catalyst or carrier, such that the rear and front electrodes are oriented in opposite directions to each other in an interdigital arrangement.

Preferably, the catalyst comprises a matrix in the form of a plate or sheet of preform prepared from ceramic fibers, and a catalyst substance or porous carrier particles dispersed and retained in the matrix among the ceramic fibers, the carrier particles having the catalyst substance supported thereon. The catalyst substance is an oxide of a metal such as vanadium, tungsten, molybdenum, titanium or the like, or a metal such as gold, silver, platinum, rhodium, palladium or ruthenium, or an oxide of the metal.

Preferably, the carrier comprises a matrix in the form of a plate or sheet of preform prepared from ceramic fibers, and porous carrier particles dispersed and retained in the matrix among the ceramic fibers.

The porous carrier may be alumina, silica, silica-alumina, titania, zeolite, zirconia, zinc oxide or the like.

According to the invention, a discharge in space or generation of current on the surface of an insulator due to the application of voltage is utilized to cause charging or polarization, ionization of the surface of a solid catalyst, electronic polarization of a reactive substance, etc. to realize or promote a catalytic function.

When a high voltage is applied across electrodes, with semiconductor particles filled in the space there between, electrons run (surface current) on the surfaces of the particles while ionizing the ambient gas, and at the same time, excite the electrons constituting solid crystals for ionization. When returning to the ground state, the excited electrons produce light (almost ultraviolet rays) peculiar to the atom. Further when electrons of high energy collide with semiconductor crystals, they force out a plurality of conduction band electrons, causing holes to appear which are thought fundamental to the exhibition of activity of a photocatalyst. Such a discharge state is termed plasma discharge.

Thus, when a required voltage is applied across the electrodes, the photocatalyst can be caused to display activity without projecting ultraviolet rays onto the catalyst from outside.

However, when such a discharge is sustained to cause ionization of gas phase and solid phase, the discharge transforms into an arc discharge involving marked heat generation, giving rise to undesirable thermal deterioration of the catalyst and impaired energy efficiency. It is accordingly desirable to lower the potential between the electrodes before the discharge transforms into arc discharge to complete plasma discharge. Stated more specifically, it is desired to apply a high a.c. voltage or pulse voltage to the electrodes. To maintain a high energy efficiency and realize an increased amount of discharge in this case, it is required to increase the frequency of the a.c. voltage or pulse voltage.

The reactor utilizing such phenomena can be used favorably, for example, for the oxidative decomposition of dioxins contained in the exhaust gases from refuse incinerators. However, in the case where the gas to be reacted contains dust, ash and like solids, these solids will accumulate on the bed of particles not only to offer increased resistance to the passage of the gas but also interfere with an effective discharge, possibly causing a short-circuit accident between the electrodes, hence the necessity of fully removing dust from the reactive gas at a position upstream from the reactor.

The catalyst or carrier according to the first feature of the invention and having a discharge electrode is a catalyst or carrier in the form of a plate or sheet (including a cloth, board, paper, etc.) and comprising electrodes formed on the respective surfaces of the catalyst or carrier and each in the form of dots, or a line or bar which may intersect itself for causing discharge through the thickness of the plate or sheet so as to cause the entire platelike or sheetlike catalyst or catalyst carrier to emit ultraviolet rays.

The electrons emitted from the cathode migrate to the anode as semiconductor surface current, ionizing the surface and producing a large number of holes. At the same time, the electrons ionize the surrounding gas, exciting outer-shell electrons of gaseous atoms or molecules. When returning to the ground state, the excited electrons produce ultraviolet rays peculiar to the substance. The energy of ultraviolet rays produces holes in the semiconductor. These holes produce oxidizing activity.

To be satisfactory, the voltage to be applied to the electrodes is up to a voltage value (3 kV/mm) required for space discharge, whereas a higher voltage can be applied so as to produce a larger quantity of ultraviolet rays and higher surface activity. The lower limit of the voltage to be applied is a voltage for initiating plasma discharge, while the higher limit is the breakdown voltage across the electrodes. These values are determined suitably according to the kind of semiconductor, composition and temperature of the atmospheric gas, etc.

Electrons tend to flow concentrically along a path of short distance between the electrodes. The flow of electrons also tends to concentrate at the portion where various kinds of resulting ions are present. Accordingly, there is a need to make the distance between the electrodes strictly uniform in order to cause a uniform discharge through the platelike catalyst or catalyst carrier.

In an arrangement wherein the electrode is provided on each surface of the platelike or sheetlike catalyst or catalyst carrier, with a uniform distance provided between the electrodes, the resistance involved in the passage of electrons through the catalyst or catalyst carrier greatly differs from the resistance involved in the movement of electrons on the surface of the catalyst or catalyst carrier, so that variations in the distance between the electrodes produce no great influence, and generally uniform ultraviolet luminescence is observed over the entire area of the catalyst or catalyst carrier.

Stated more specifically in view of the above, the present invention provides as a first feature thereof a catalyst or catalyst carrier having a discharge electrode and comprising a catalyst or catalyst carrier in the form of a plate or sheet, the electrode being in the form of comb teeth and provided on each of opposite surfaces of the catalyst or carrier. The. electrodes on the opposite surfaces are in an interdigital arrangement (as displaced from each other, for example, by 1/2 of the spacing between the comb teeth).

The smaller the thickness of the digits or teeth of the electrodes, the better, whereas in the case where the platelike or sheetlike catalyst or catalyst carrier is large-sized, the thickness is preferably 0.1 to 2 mm in view of reliability against a break. The comblike electrodes are produced favorably by applying an electrically conductive printing ink on the front and rear surfaces of the platelike or sheetlike catalyst or carrier by printing in view of production cost and accuracy of spacing between the comb teeth.

Preferably, the catalyst or catalyst carrier in the form of a plate or sheet comprises a matrix in the form of a plate or sheet (paper, cloth, board or the like) of preform of ceramic fibers, and a catalyst substance or fine catalyst carrier particles dispersed and retained in the matrix among the ceramic fibers, the carrier particles having the catalyst substance supported thereon. The catalyst or catalyst carrier having such a structure has a relatively large amount of space in the interior, renders reactive substances highly dispersible and achieves an improved ultraviolet emission efficiency by the excitation of the gas present in the space.

The catalyst or catalyst carrier equipped with discharge electrodes and having the foregoing structure exhibits high catalyst activity in exhaust gas streams and effectively functions to purify exhaust gases by oxidizing and decomposing dioxins, oxidizing hydrocarbons and oxidizing NO. The catalyst or catalyst carrier is in the form of a plate or sheet in this case, is therefore less prone to clogging with dust or like solids, while the gas stream containing dust or like solids in suspension is not subjected directly to a discharge, rendering the dust less likely to be charged and to be electrostatically deposited on the catalyst surface or the electrodes.

A second feature of the present invention relates to a catalyst block having discharge electrodes.

The catalyst block having discharge electrodes and according to the second feature of the invention comprises a plurality of catalyst or carrier plates or sheets and each having an electrode formed on at least one surface thereof, the electrode being in the form of dots, or a line or bar which may intersect itself, and a photocatalyst interposed between the plates or sheets and/or disposed externally thereof.

The catalyst or carrier plates or sheets or use in the catalyst block include those in the form of a cloth, board, paper or the like. Preferably the carrier plate or sheet having an electrode comprises a matrix in the form of a plate or sheet of preform prepared from ceramic fibers, and porous carrier particles dispersed and retained in the matrix among the ceramic fibers. The porous carrier may be alumina, silica, silica-alumina, titania, zeolite, zirconia, zinc oxide or the like.

The catalyst plates or sheets having an electrode and the photocatalyst for use in the catalyst block preferably comprise a matrix in the form of a plate or sheet of preform prepared from ceramic fibers, and a catalyst substance or porous carrier particles dispersed and retained in the matrix among the ceramic fibers, the carrier particles having the catalyst substance supported thereon. The photocatalyst may be, for example, a granular or particulate catalyst or in the form of a flat plate or corrugated plate. The catalyst substance is an oxide of a metal such as vanadium, tungsten, molybdenum, titanium or the like, or a metal such as gold, silver, platinum, rhodium, palladium or ruthenium, or an oxide of the metal.

The electrode for use in the catalyst block is preferably one formed by applying an electrically conductive printing ink to at least one surface of the catalyst or carrier plate or sheet by printing, sintering a metal powder on the surface, or vapor-depositing or sputtering a metal onto the surface.

Preferably, the electrode is in the form of comb teeth. It is desirable that the comb-tooth electrode be formed on each of the front and rear surfaces of the catalyst or carrier plate or sheet, such that the rear and front electrodes are oriented in opposite directions to each other in an interdigital arrangement.

Preferably, the catalyst block comprises flat catalyst or carrier plates having electrodes and corrugated photocatalyst plates which are alternately arranged into superposed layers. The block has a honeycomb structure in its entirety. With the honeycomb catalyst block, the ends of the catalyst or carrier plates which are positioned along the direction of gas flow project beyond the corrugated photocatalyst plates, and the comb-shaped electrodes at each projecting end have their shoulder portions connected to one another by an electrode connector. A conductor in the form of a wire, bar, shaft, belt or the like is used as the connector. The connector extends through or across the shoulder portions of the comb-shaped electrodes at the projecting end, whereby the adjacent electrodes are connected to each other. It is desirable to provide a plurality of electrode connectors in view of the possibility of the electrical contact becoming faulty due to the oxidation of the electrode or connector while the catalysts are in use.

With the catalyst or carrier having discharge electrodes and according to the first feature of the invention, or with the catalyst block having discharge electrodes and according to the second feature of the invention, a voltage of 3 to 50 kV per 10 mm of the electrode spacing is applied across a pair of electrodes at 0.04 to 200 kHz, causing a discharge across the electrodes through the catalyst or carrier, whereby the catalyst or carrier having the electrodes can be activated.

The catalyst or carrier having discharge electrodes and according to the first feature of the invention or the catalyst block having discharge electrodes and according to the second feature of the invention is installed in a gas flow channel, and voltage is applied to the pair of electrodes under the above conditions to cause a discharge across the electrodes through the catalyst or carrier and thereby activate the catalyst or carrier. Thus, the catalyst or carrier or the block is used for the catalytic reaction of the components of the gas which are to be treated.

For the catalytic reaction of gases, the catalyst or carrier having discharge electrodes and according to the first feature of the invention or the catalyst block having discharge electrodes and according to the second feature of the invention is installed, for example, in a combustion exhaust gas flow channel for oxidizing and decomposing dioxins in the gas and oxidizing nitrogen monoxide in the gas, or in a flow channel for a gas containing organic odor components for oxidizing and decomposing the odor components of the gas.

A third feature of the present invention relates to a method of decomposing dioxins.

The method of decomposing dioxins according to the third feature of the invention comprises filling a particulate catalyst exhibiting semiconductor characteristics into a space between a pair of electrodes, applying a voltage across the electrodes to cause plasma discharge between the catalyst particles, and passing an exhaust gas to be treated through a bed filled with the catalyst to decompose dioxins in the exhaust gas.

Like the gases released from combustion devices such as refuse incinerators, exhaust gases generally contain dioxins, and nitrogen oxides and hydrocarbons at the same time.

The catalyst mentioned above has photocatalyst activity. Examples of suitable catalysts are particulate or granular oxide catalysts exhibiting semiconductor characteristics, such as titania, zinc oxide, iron oxide, or a catalyst comprising an anatase titania carrier and a thin titania layer having photocatalyst activity and coating the carrier.

Preferably, the voltage is applied intermittently with high-frequency waves, for example, at a frequency of 40 Hz to 10 MHz. Preferably, the field intensity between the pair of electrodes is 0.5 to 50 kV/cm.

When practiced, the above method decomposes dioxins and, at the same time, converts NO in the exhaust gas to $NO_2$ and/or converts hydrocarbons therein to carbon dioxide.

The invention provides as the third feature thereof an apparatus for decomposing dioxins which comprises a pair of electrodes arranged in an exhaust gas flue, a catalyst bed disposed between the pair of electrodes and comprising a particulate catalyst exhibiting semiconductor characteristics, and a power source for applying a voltage across the electrodes to cause plasma discharge between the catalyst particles and produce ultraviolet rays for the excitation of the photocatalyst, whereby dioxins in an exhaust gas flowing through the catalyst bed are decomposed.

Preferably, the exhaust gas flue is provided with a dust removal device (such as a bag filter) at a position upstream from the pair of electrodes, and with a denitration device (wherein, for example, ammonia is used as a reducing agent) at a position downstream from the pair of electrodes.

The voltage to be applied is the field intensity $\times$ the spacing between the electrodes, as required for so-called space discharge, and is so determined that the field intensity between the pair of electrodes will be 0.5 to 50 kV/cm. However, a voltage greater or smaller than the above value can be used in order to adjust the amount of discharge, amount of ultraviolet luminescence, etc. The lower limit of the voltage to be applied is a voltage permitting plasma discharge and varies with the kind of semiconductor particles to be filled, the shape of the particles, state of filling, and the composition and temperature of the gas providing the atmosphere. The upper limit of the voltage to be applied is a value for initiating arc discharge and varies mainly with the frequency of the voltage to be applied.

The wavelength of ultraviolet rays is dependent on the composition of the semiconductor catalyst particles and that of the gas of the atmosphere. When the semiconductor catalyst is anatase titania and the atmosphere is air, the wavelength of ultraviolet rays is 300 to 350 nm. This wavelength range is desirable for titania photocatalysts.

The ultraviolet luminescence efficiency relates to the size of the semiconductor catalyst particles. It is thought that an increased luminescence efficiency will result if interstices of not smaller than one times the wavelength of ultraviolet rays occur frequently between particles in the discharge process, whereas this still remains to be substantiated. When particle-to-particle interstices are excessively great, the discharge is so-called space discharge, the luminescence efficiency and wavelength appear to be greatly influenced by the atmospheric gas, and such interstices are undesirable from the viewpoint of controlling ultraviolet rays.

The bed of semiconductor catalyst particles wherein plasma discharge is sustained exhibits high oxidative catalyst activity, almost completely oxidizing the inorganic compounds and organic compounds passing through the catalyst bed at a low temperature of up to 200° C.

For example, when air containing dioxins (4-chlorodioxin, etc.) in trace quantities, for example, of up to 10 ng/m$^3$ is passed through the bed of semiconductor catalyst particles, the dioxins can be decomposed almost completely at 150° C.

Further when air containing up to 100 ppm of NO is passed through the bed of semiconductor catalyst, the NO can be converted to $NO_2$. The conversion can be controlled as desired by varying the voltage to be applied and the frequency thereof.

For the purpose of oxidizing common compounds, titania is suitable for use as the semiconductor catalyst. When titania is in the form of anatase crystals and given photocatalyst activity, the titania can be made function as a photocatalyst partly emitting ultraviolet rays, with another part thereof acting to absorb ultraviolet rays, hence effective use of the energy of discharge.

Nevertheless, the most appropriate semiconductor catalyst can be selected for the desired reaction, so that the semiconductor catalyst is not limited to titania.

In oxidizing dioxins in trace quantities of up to 1 ng/m$^3$, it is effective to modify the semiconductor catalyst with a transition metal, alkali metal, alkaline earth metal or an oxide thereof so as to give the catalyst properties to adsorb dioxins before use.

If the dust entrained in the gas accumulates in the bed of semiconductor catalyst particles, an altered state of discharge occurs, so that it is desirable to install a bag filter or like dust removal device at a position upstream from the dioxin decomposition apparatus according to the third feature of the invention.

The first and second features of the invention provide a catalyst or catalyst carrier which has a discharge electrode and a novel structure and which is suitable for use in catalytic reactions for purifying exhaust gases, for example, from refuse incinerators, boilers, diesel engines, etc.

When the catalyst block having the structure according to the second feature of the invention is used, the ultraviolet rays produced by the catalyst having electrodes act effectively for the activation of the usual photocatalyst.

The photocatalyst also serves the function of a spacer for giving a required spacing between the catalyst plates or sheets having electrodes.

According to the third feature of the invention, a voltage is applied across a pair of electrodes to produce plasma discharge between catalyst particles, uniformly generating ultraviolet rays on the surfaces of catalyst particles or in the vicinity thereof to thereby realize photocatalyst activity and decompose dioxins in an exhaust gas in a compact reactor with a high efficiency.

BRIEF DESCRIPTION OF THE DRAWINGS

FIG. 1 is a plan view showing an example of comb-tooth electrode pattern.

FIG. 2 is a perspective view showing the front and rear surfaces of a platelike catalyst with a comb-tooth electrode provided on each of the surfaces.

FIG. 3 is a plan view showing an example of catalyst having discharge electrodes.

FIG. 4 is a graph showing the relationship between the reaction temperature and the NO oxidation rate.

FIG. 5 is a graph showing the relationship between the reaction temperature and o-chlorotoluene decomposition rate.

FIG. 6(a) is a plan view of a catalyst block having discharge electrodes, FIG. 6(b) is a front view of the same, and FIG. 6(c) is a view in vertical cross section of the same.

FIG. 7 is a view in section showing how to connect front electrodes on catalyst plates to each other.

FIG. 8(a) is a plan view showing a corrugated carrier plate for a photocatalyst, and FIG. 8(b) is a side elevation of the same.

FIG. 9 is a perspective view showing the front and rear surfaces of a platelike catalyst with a comb-tooth electrode provided on each of the surfaces.

FIG. 10(a) is a front view showing a test catalyst block having discharge electrodes, and FIG. 10(b) is a view in vertical cross section of the same.

FIG. 11 is a diagram showing a reaction tester.

FIG. 12 is a graph showing the relationship between the reaction temperature and the NO oxidation reaction rate.

FIG. 13 is a graph showing the relationship between the reaction temperature and o-chlorotoluene decomposition reaction rate.

FIG. 14 is a perspective view showing the front and rear surfaces of a platelike catalyst with a comb-tooth electrode provided on each of the surfaces.

FIG. 15 is a perspective view of a catalyst block having discharge electrodes.

FIG. 16 is a graph showing the relationship between discharge power and oxidation rate.

FIG. 17 is a graph showing the relationship between discharge power and oxidation rate.

FIG. 18 is a graph showing the relationship between the concentration and the oxidation rate.

FIG. 19 is a graph showing the relationship between discharge power and oxidation rate.

FIG. 20 is a graph showing the relationship between discharge power and oxidation rate.

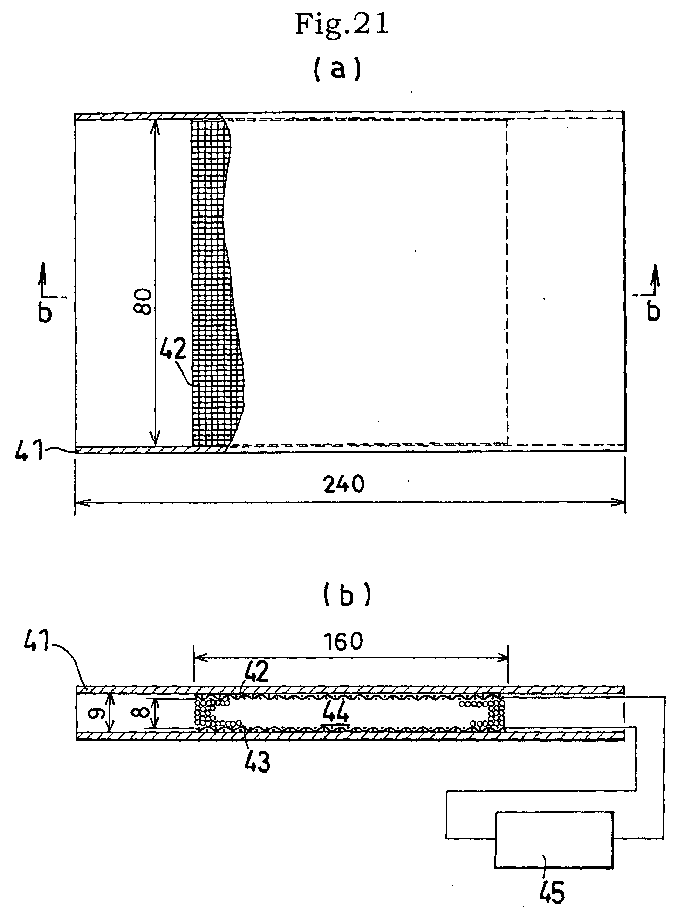

FIG. 21(a) is a front view partly broken away and showing a plasma discharge decomposition reactor, and FIG. 21(b) is a view in section taken along the line b-b in FIG. 21(a).

BEST MODE OF CARRYING OUT THE INVENTION

The present invention will be described below in detail with reference to examples. Examples 1 to 3 correspond to the first feature of the invention, Examples 4 to 8 to the second feature of the invention, and Example 9 to the third feature of the invention.

Example 1

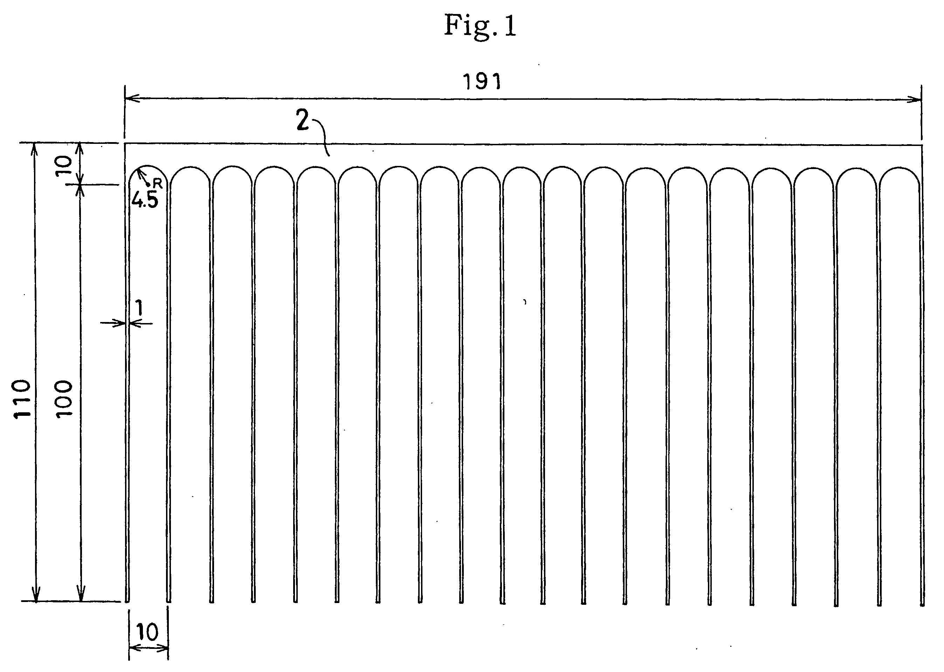

An electrically conductive ink (product of Noritake Co., Ltd.) in the form of a paste and containing silver was applied to a surface of a photocatalyst sheet (product of Nihon Musen Co., Ltd.) containing titania and serving as a catalyst substance in a pattern shown in FIG. 1 by screen printing. The paste print was heated at 150° C for 1 hour in the air for curing. A front electrode 2 in the form of a comb teeth was thus formed on the front surface of the photocatalyst sheet.

The silver paste was then applied to the rear surface of the sheet by screen printing in the same pattern as the front electrode, with the combs oriented in opposite directions to each other and with each comb tooth on the rear surface positioned exactly in the center between each pair of adjacent teeth of the front electrode in an interdigital arrangement. The print was cured under the same conditions as above. A rear electrode 3 in the form of a comb teeth was thus formed on the rear surface of the photocatalyst sheet.

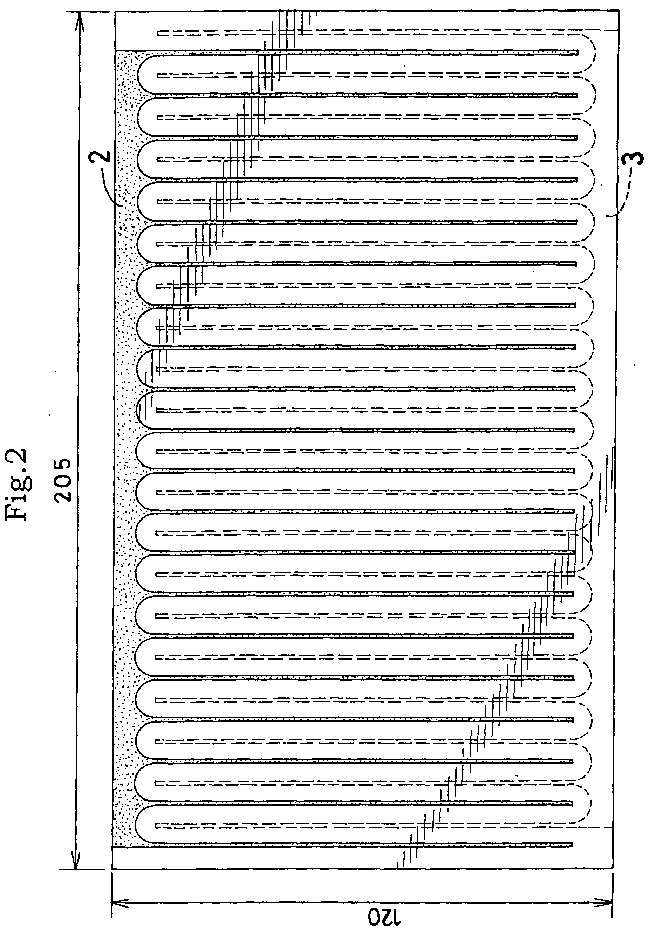

FIG. 2 is a perspective view showing the front and rear surfaces of the catalyst obtained with the discharge electrode formed on each surface.

Example 2

A 15 -kV a. c. voltage was applied at 60 Hz across the electrode terminals on the catalyst obtained in Example 1 to recognize that ultraviolet rays (300 to 400 nm in wavelength) were emitted by the entire area of the catalyst.

Example 3

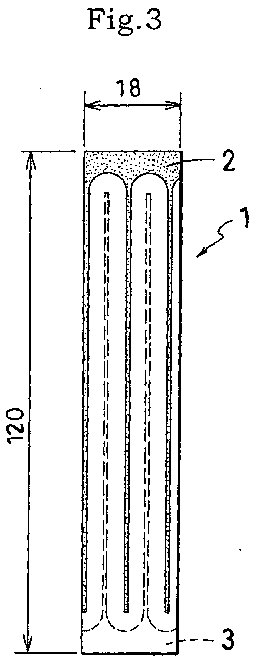

The catalyst obtained in Example 1 was cut to prepare a platelike catalyst 1 shown in FIG. 3. The catalyst was held between sheets of Teflon net and filled into a reactor tube of quartz glass having a gas flow channel, measuring 10 mm × 20 mm in section. The reactor tube was covered with a heater and shielded against ultraviolet rays. Subsequently, a prepared exhaust gas in the form of air containing 100 ppm of NO was passed through the reactor tube at a flow rate of 2.5 liters/min, a.c. voltage of 10 kV was applied to the catalyst at 60 Hz, and the catalyst was checked for NO oxidation efficiency at a reaction temperature of 100 to 200°C by the chemiluminescence method. The oxidation rate was calculated from Equation [1] given below.

$$\text{Oxidation rate (\%)}$$

$$=(\text{Inlet concn. - Outlet concn.})/\text{Inlet concn.} \times 100 \qquad [1]$$

By hydrogen flame decomposition gas chromatography, the catalyst was also checked for the oxidative decomposition of o-chlorotoluene in the same manner as above with the exception of using a prepared exhaust gas comprising air containing 100 ppm of o-chlorotoluene (which is generally known for use as a substitute for dioxins) in place of the NO-containing air serving as the exhaust gas. The oxidative decomposition rate was calculated from Equation [1].

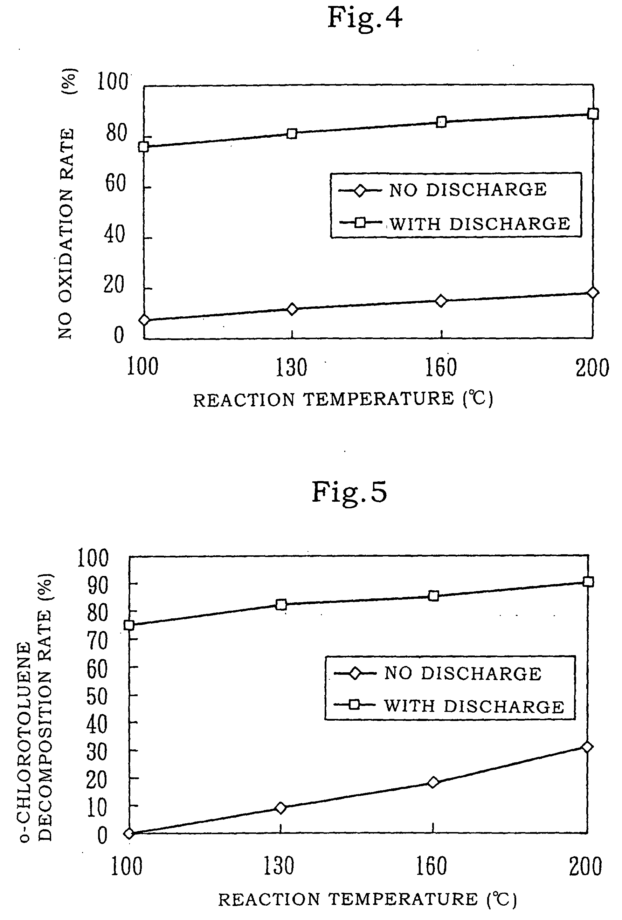

The results obtained are given in Table 1, and FIGS. 4 and 5, which indicate that the platelike catalyst 1 is highly effective for oxidizing NO and decomposing o-chlorotoluene due to a discharge effect.

Table 1

| Reaction temp.(°C) | NO oxidation rate (%) | | o-Chlorotoluene decomp. rate (%) | |
|---|---|---|---|---|
| | No discharge | With discharge | No discharge | With discharge |
| 100 | 8 | 76 | 0 | 75 |
| 130 | 12 | 81 | 9 | 82 |
| 160 | 15 | 85 | 18 | 85 |
| 200 | 18 | 88 | 31 | 90 |

Example 4

A ceramic paper (MCS-05, 0.5 mm in thickness) manufactured by Nihon Musen Co., Ltd. was impregnated with a titania sol (CSN-30, 32 wt. % in solids concentration) manufactured by Ishihara Sangyo Kaisha, Ltd., then dried at 120° C and further fired in air at 450° C for 5 hours to obtain titania-impregnated flat plates, measuring 120 mm × 55 mm and having 140 g/m$^2$ of titania supported thereon.

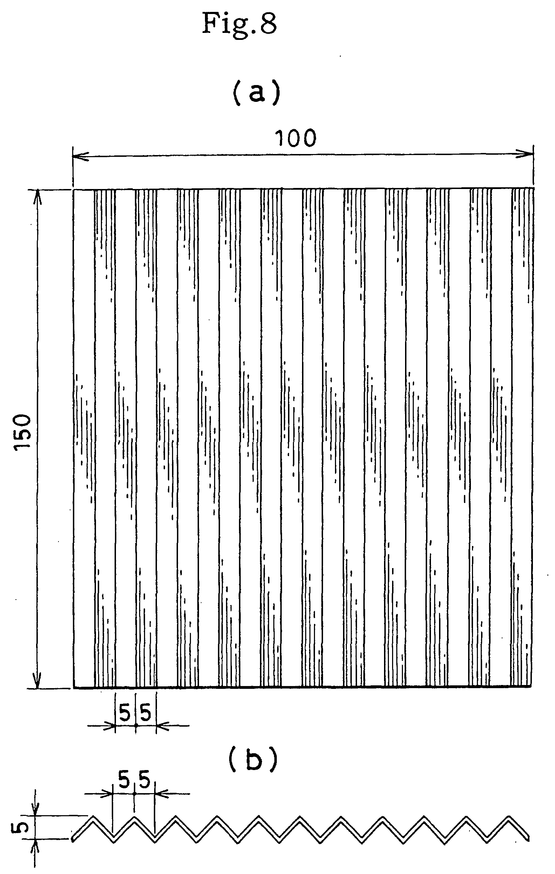

Further titania-impregnated corrugated plates measuring 100 mm x 55 mm and having 70 g/m$^2$ of titania supported thereon as shown in FIG. 8 were prepared by impregnating a ceramic paper (MCS-025, 0.25 mm in thickness) manufactured by Nihon Musen Co., Ltd. with the same titania sol as above, affixing the wet paper to a corrugated form plate of aluminum, drying the paper at 120° C in this state, and firing the dried paper as removed from the form plate at 450° C for 5 hours.

These flat plates and corrugated plates were immersed in a 3% aqueous solution of nitric acid for 14 hours, thereafter washed in a running water for 10 hours and subsequently dried at 120° C to obtain flat carrier plates and corrugated carrier plates.

Flat catalyst plates and corrugated catalyst plates having photocatalyst activity were prepared by immersing these carrier plates in a liquid obtained by diluting a titania sol (STS-01, 33 wt. % in solids content) manufactured by Ishihara Sangyo Kaisha, Ltd. with pure water threefold, drying the plates at 120° C, and firing the plates in the air at 300° C for 1 hour, at 450° C for 1 hour and at 520° C for 1 hour.

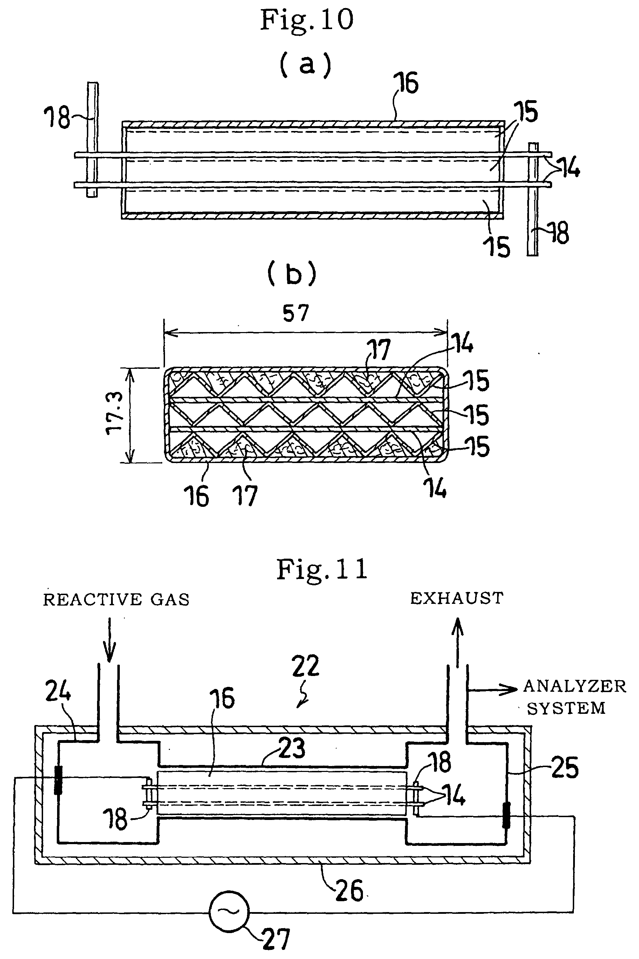

An electrically conductive ink (SS-24807, product of Nihon Acheson Co., Ltd.) in the form of a paste and containing silver was applied by screen printing to a surface of each of the flat catalyst plates in a pattern shown in FIG. 9. The paste print was heated in the air at 150° C for 1 hour for curing. In this way, a front electrode 12 in the form of comb teeth was formed on the surface of each flat catalyst plate. The silver paste was then applied to the rear surface of the catalyst plate by screen printing in the same pattern as the front electrode, with the combs oriented in opposite directions to each other and with each comb tooth on the rear surface positioned exactly in the center between each pair of adjacent teeth of the front electrode in an interdigital arrangement. The print was cured under the same conditions as above. A rear electrode 13 in the form of a comb teeth was thus formed on the rear surface of the flat catalyst plate. FIG. 9 is a perspective view showing the front and rear surfaces of the flat catalyst plate 14 obtained with the electrode formed on each surface.

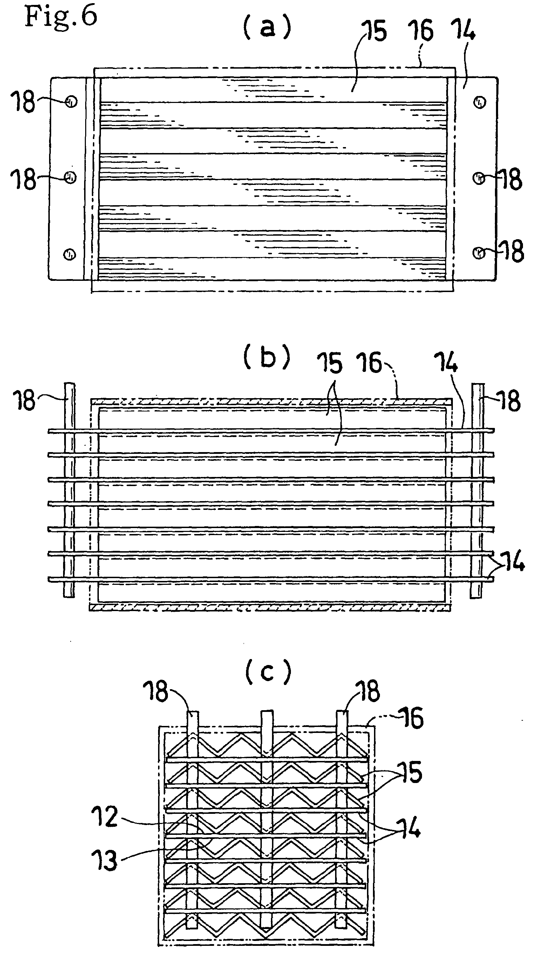

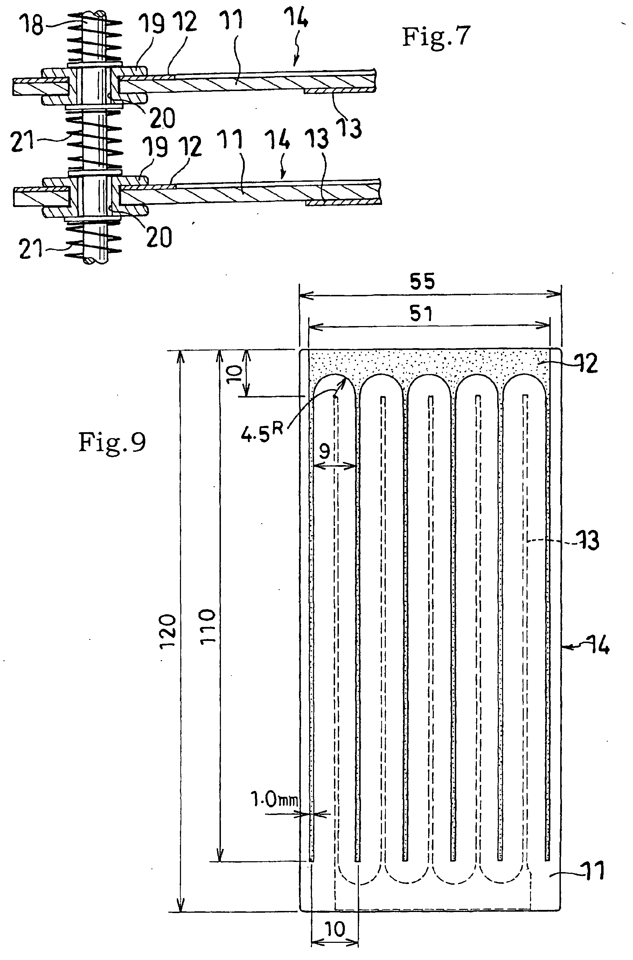

Subsequently, the flat catalyst plates 14 having electrodes and corrugated photocatalyst plates 15 were arranged alternately in superposed layers and held together by a surrounding frame 16 as shown in FIGS. 6. The frame 16 was prepared from a ceramic paper, 1 mm in thickness, with use of a silica colloid for stiffening. Opposite ends of the flat catalyst plates 14 having electrodes were projected outward along the direction of gas flow beyond the corrugated photocatalyst plates 15. The shoulder portions of the comb-shaped front electrodes 12 were connected to one another by three electrode connecting shafts 18 at one projecting end of the plate assembly. Stated more specifically with reference to FIG. 7, one end of the flat catalyst plate 14 was forcibly fitted into a peripheral recess in a conductive connecting member 19, the shaft 18 was passed through a center through bore 20 in the connecting member 19, and a coiled conductive spring 21 was interposed between the member 19 and another connecting member 19 adjacent thereto in contact with the members 19. Similarly, the shoulder portions of the comb-shaped rear electrodes 13 were connected to one another by three electrode connecting shafts 18 at the other projecting end of assembly of the flat catalyst plates 14.

In this way, a catalyst block having discharge electrodes was prepared.

Further with reference to FIGS. 10, two flat catalyst plates 14 having electrodes and three corrugated photocatalyst plates 15 were arranged alternately in superposed layers and held together by a surrounding frame 16 to fabricate a test catalyst block having discharge electrodes. Quartz wool 17 was packed to a high density into the spaces between each outer corrugated photocatalyst plate 15 and the frame 16 so as to prevent the flow of prepared exhaust gas through these spaces. In the same manner as described above, the front electrodes, as well as the rear electrodes, were connected to one another by electrode connecting shafts 18 at the corresponding projecting end of the assembly of the corrugated photocatalyst plates.

The test catalyst block was packed into a test tube 23 of a reaction tester 22 shown in FIG. 11. The reaction tester 22 comprises the reaction tube 22 of stainless steel, a gas inlet chamber 24 at one end of the tube, a gas outlet chamber 25 at the other end thereof, and a constant-temperature chamber 26 accommodating these components. The electrodes at one end of the assembly of flat catalyst plates, i.e., the front electrodes, and the electrodes at the other end thereof, i.e., the rear electrodes were connected to an a.c. power source 27. The space between the wall of the test tube 23 and the surrounding frame of the test catalyst block was sealed by a ceramic sheet having a thickness of 3 mm.

A prepared exhaust gas comprising air containing 100 ppm of NO was then passed through the reaction tester 22 at a flow rate of 1.9 Nm$^3$/hour, an a.c. voltage of 10 kV was applied across the electrodes at 60 Hz, and the test catalyst block was checked for NO oxidation efficiency (oxidation rate) at a reaction temperature of 100 to 200° C by the chemiluminescence method.

By hydrogen flame decomposition gas chromatography, the catalyst block was also checked for the oxidative decomposition (decomposition rate) of o-chlorotoluene in the same manner as above with the exception of using a prepared exhaust gas comprising air containing 100 ppm of o-chlorotoluene in place of the NO-containing air serving as the exhaust gas.

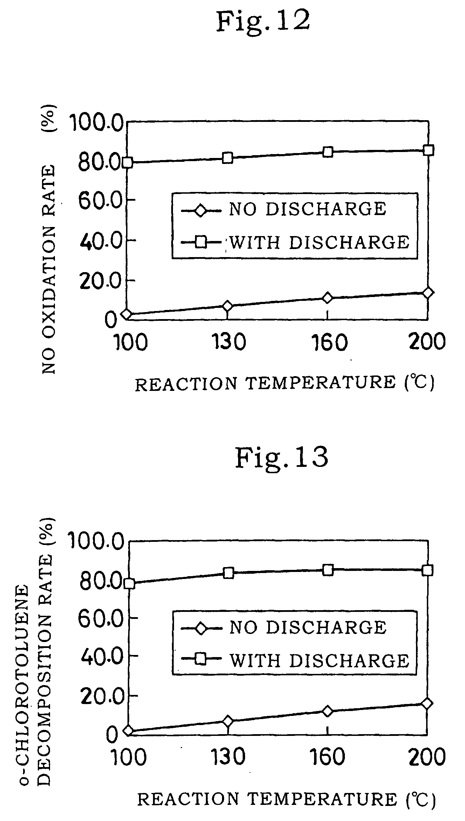

The results obtained are given in Table 2, and FIGS. 12 and 13, which indicate that the catalyst block is highly effective for oxidizing NO and decomposing o-chlorotoluene by oxidation due to a discharge effect.

Table 2

| Reaction temp.(°C) | NO oxidation rate (%) | | o-Chlorotoluene decomp. rate (%) | |
|---|---|---|---|---|
| | No discharge | With discharge | No discharge | With discharge |
| 100 | 3 | 79 | 2 | 78 |
| 130 | 7 | 81 | 7 | 83 |

Table 2   (continued)

| Reaction temp.(°C) | NO oxidation rate (%) | | o-Chlorotoluene decomp. rate (%) | |
|---|---|---|---|---|
| | No discharge | With discharge | No discharge | With discharge |
| 160 | 11 | 84 | 12 | 85 |
| 200 | 14 | 85 | 16 | 85 |

Example 5

A ceramic paper (MCS050, 50 mm × 50 mm, 0.5 mm in thickness) manufactured by Nihon Musen Co. , Ltd. was immersed in titania colloid prepared by hydrolyzing titanium isopropoxide to obtain a gel and adding hydrochloric acid to the gel for deflocculation. The paper was then dried at 120° C and further fired in the air at 450° C for 5 hours to obtain a flat plate A having 25 g/m² of titania photocatalyst supported thereon.

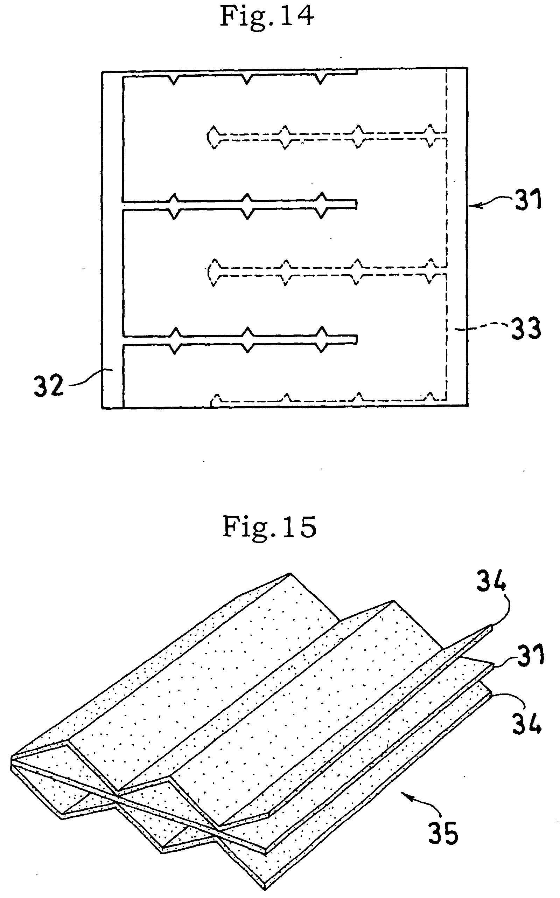

Next, a front electrode 32 and a rear electrode 33, which were in the form of comb teeth, were formed respectively on the front and rear surfaces of the catalyst plate A by the same procedure as in Example 4 using a conductive ink paste (SS-24807, product of Nihon Acheson Co., Ltd.) containing silver. FIG. 14 is a perspective view showing the front and rear surfaces of the resulting flat photocatalyst plate 31 having the electrodes.

The photocatalyst plate 31 was packed into a reaction tube of a reaction tester, which was the same as the one used in Example 4 except that the reaction tube therein was replaced by a reaction tube of acrylic resin having a flow channel measuring 50 mm x 17 mm in cross section. A prepared exhaust gas comprising air saturated with moisture and containing 150 ppm of NO and 40 ppm of o-chlorotoluene was passed through the reaction tester at a flow rate of 2.5 liters/min at room temperature, an a.c. voltage was applied at a frequency of 1000 Hz (sine waves) to effect discharge under altered conditions, and the catalyst plate was checked for NO oxidation rate by the chemiluminescence method and for oxidation rate of o-chlorotoluene by hydrogen flame decomposition gas chromatography. The oxidation rates were calculated from Equation [1] in Example 3.

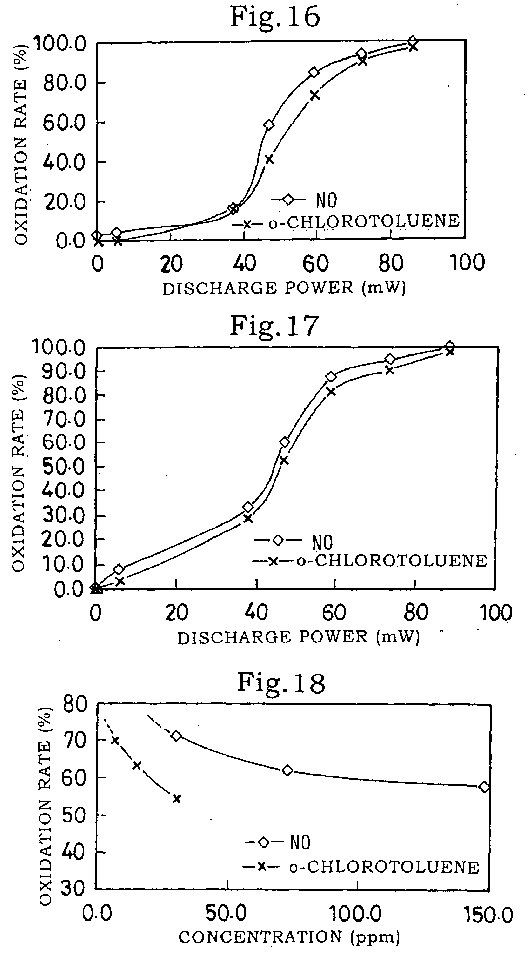

The results obtained are shown in Table 3 and FIG. 16, which reveal that the catalyst was excited by the discharge to oxidize NO and decompose o-chlorotoluene by oxidation.

Table 3

| Exp. No. | Voltage | Average current | Inlet | | | Outlet | | | Oxidation rate (%) | |
|---|---|---|---|---|---|---|---|---|---|---|
| | kV | μA | NO ppm | NO₂ ppm | o-CT ppm | NO ppm | NO₂ ppm | o-CT ppm | NO | o-CT |
| 1 | 0.0 | 0.0 | 152.0 | 2.0 | 43 | 149.2 | 4.3 | 44.0 | 1.8 | 0.0 |
| 2 | 5.0 | 1.1 | 145.0 | 3.1 | 38 | 139.5 | 7.5 | 38.0 | 3.8 | 0.0 |
| 3 | 6.0 | 6.2 | 148.0 | 1.5 | 38 | 125.5 | 16.5 | 32.0 | 15.2 | 15.8 |
| 4 | 7.0 | 6.7 | 150.0 | 2.5 | 42 | 63.1 | 84.2 | 25.0 | 57.9 | 40.5 |
| 5 | 8.0 | 7.4 | 141.0 | 2.6 | 37 | 22.8 | 118.0 | 10.0 | 83.8 | 73.0 |
| 6 | 9.0 | 8.0 | 151.0 | 2.1 | 40 | 10.7 | 138.9 | 4.1 | 92.9 | 89.8 |
| 7 | 10.0 | 8.6 | 149.0 | 2.8 | 40 | 1.3 | 141.0 | 1.1 | 99.1 | 97.3 |
| o-CT: o-chlorotoluene | | | | | | | | | | |

Example 6

The same ceramic paper as used in Example 5 was immersed in the titania colloid solution used in Example 5, the wet paper is affixed to a corrugated form plate of aluminum and dried in this state at 120° C, and the dried paper was removed from the form plate and fired at 450° C for 5 hours to prepare a titania-impregnated corrugated plate 34, measuring 50 mm × 50 mm and having 25 g/m² of titania supported thereon as shown in FIG. 15.

The flat plate 31 was sandwiched between two corrugated plates 34 to prepare a catalyst block 35 in the form of a sandwich and having discharge electrodes shown in FIG. 15.

The catalyst block was packed into a reaction tube of a reaction tester and checked for NO oxidation rate and o-chlorotoluene oxidation rate by the same procedure as in Example 5.

The results obtained are shown in Table 4 and FIG. 17, which reveal that the photocatalyst of the corrugated plates was excited by the ultraviolet rays produced by discharge, achieving an increased NO oxidation rate and a higher o-chlorotoluene oxidation rate.

Table 4

| Exp. No. | Voltage | Average current | Inlet | | | Outlet | | | Oxidation rate (%) | |
|---|---|---|---|---|---|---|---|---|---|---|
| | kV | μA | NO ppm | NO$_2$ ppm | o-CT ppm | NO ppm | NO$_2$ ppm | o-CT ppm | NO | o-CT |
| 1 | 0.0 | 0.0 | 153.0 | 1.8 | 45 | 152 | 1.9 | 44.0 | 0.7 | 0.0 |
| 2 | 5.0 | 1.2 | 150.0 | 2.2 | 39 | 138 | 7.5 | 37.6 | 8.0 | 3.6 |
| 3 | 6.0 | 6.3 | 149.0 | 2.0 | 40 | 100.2 | 16.5 | 28.5 | 32.8 | 28.8 |
| 4 | 7.0 | 6.7 | 148.0 | 2.1 | 42 | 59.5 | 84.2 | 19.8 | 59.8 | 52.9 |
| 5 | 8.0 | 7.3 | 148.0 | 2.6 | 40 | 18.5 | 118.0 | 7.4 | 87.5 | 81.5 |
| 6 | 9.0 | 8.1 | 150.0 | 1.8 | 39 | 8.1 | 138.9 | 3.7 | 94.6 | 90.5 |
| 7 | 10.0 | 8.8 | 148.0 | 2.3 | 40 | 0.5 | 141.0 | 0.8 | 99.7 | 98.0 |

Example 7

The same procedure as in Examples 5 was repeated to check variations in oxidation rates with the exception of varying the NO and o-chlorotoluene concentrations of the prepared exhaust gas.

The results are given in Table 5 and FIG. 18, which reveal that the oxidation rate increases with a decrease in the concentration of the compound to be oxidized although usual discharge in space achieves a substantially constant oxidation rate if the discharge is effected under unaltered conditions.

Table 5

| Exp. No. | Voltage | Average current | Inlet | | | Outlet | | | Oxidation rate (%) | |
|---|---|---|---|---|---|---|---|---|---|---|
| | kV | μA | NO ppm | NO$_2$ ppm | o-CT ppm | NO ppm | NO$_2$ ppm | o-CT ppm | NO | o-CT |
| 1 | 7.0 | 6.6 | 148.0 | 2.1 | 42 | 62.1 | 86.8 | 25.0 | 58.0 | 40.5 |
| 2 | 7.0 | 6.6 | 72.6 | 1.8 | 42 | 27.6 | 40.7 | 24.3 | 62.0 | 42.1 |
| 3 | 7.0 | 6.6 | 30.1 | 0.8 | 42 | 8.7 | 22.8 | 24.1 | 71.1 | 42.6 |
| 4 | 7.0 | 6.6 | 30.3 | 2.1 | 30 | 8.6 | 22.5 | 13.6 | 71.6 | 54.7 |
| 5 | 7.0 | 6.6 | 29.8 | 2.6 | 15 | 8.5 | 22.5 | 5.5 | 71.5 | 63.3 |
| 6 | 7.0 | 6.6 | 29.5 | 1.8 | 7 | 8.5 | 22.5 | 2.1 | 71.2 | 70.0 |
| o-CT: o-chlorotoluene | | | | | | | | | | |

Example 8

The same flat plates 31 as obtained in Example 5 and having a titania photocatalyst supported thereon were caused to support different metal oxides thereon by the usual immersion method for impregnation to prepare metal-supported catalysts, which were checked for NO and o-chlorotoluene oxidation rates by the same procedure as in Example 5.

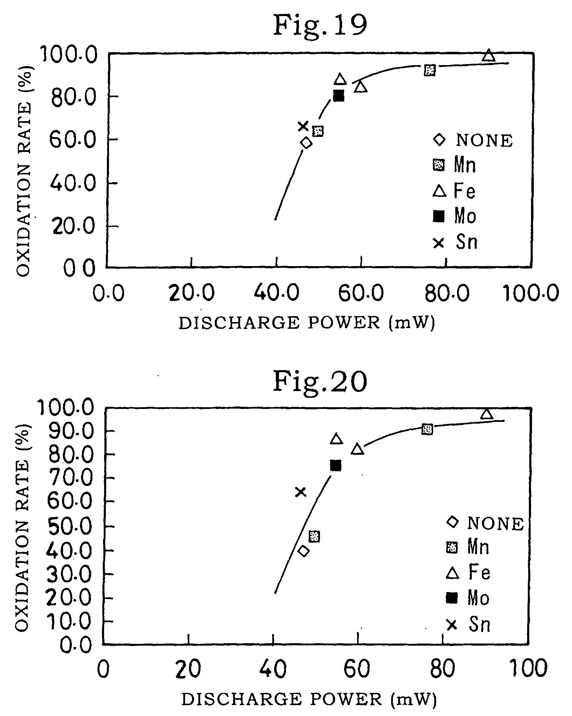

The particulars as to the catalysts prepared and the oxidation rates achieved are given in Table 6 and FIGs. 19 and 20, which indicate that different metals supported vary the current value relative to the discharge voltage and achieve varying oxidation rates, but do not greatly vary the oxidation rates relative to the discharge power.

Table 6

| Exp. No. | Supported metal | Impregnant concn. mol/l | Discharge voltage kV | Average current μA | Discharge power mW | NO oxidation rate % | o-CT oxidation rate % |
|---|---|---|---|---|---|---|---|
| 1 | - | - | 7 | 6.7 | 46.9 | 58.1 | 39.5 |
| 2 | Mn | 0.1 | 7 | 7.1 | 49.7 | 63.2 | 45.1 |
| 3 | | 0.1 | 8 | 9.5 | 76.0 | 92.1 | 90.8 |

Table 6 (continued)

| Exp. No. | Supported metal | Impregnant concn. mol/l | Discharge voltage kV | Average current µA | Discharge power mW | NO oxidation rate % | o-CT oxidation rate % |
|---|---|---|---|---|---|---|---|
| 4 | Fe | 0.1 | 7 | 7.8 | 54.6 | 88.0 | 86.5 |
| 5 |  | 0.1 | 8 | 11.2 | 89.6 | 99.0 | 97.8 |
| 6 |  | 0.2 | 7 | 8.5 | 59.5 | 84.2 | 82.3 |
| 7 | Mo | 0.1 | 7 | 7.8 | 54.6 | 79.9 | 75.1 |
| 8 | Sn | 0.1* | 7 | 6.6 | 46.2 | 66.3 | 64.1 |

*methanol solution        o-CT: o-chlorotoluene

Example 9

A pair of electrodes 42, 43 prepared from a stainless steel net (SUS304, 30 mesh, 0.2 mm in wire diameter, 160 × 80 × 0.5 mm in size) were installed as opposed to each other within a quartz glass reaction tube 41 having a flow channel of rectangular cross section of 80 × 9 mm. The spacing between the electrodes was 8 mm. A catalyst bed 44 was prepared by filling spherical particles of titania photocatalyst, 1 mm in diameter, into the space between the electrodes. A voltage of 20 kV was applied across the electrodes intermittently at 200 Hz by a power source 45. Luminescence of ultraviolet rays was observed over the entire catalyst bed 44.

Air containing 100 ppm of NO was passed through the reaction tube 41 at a flow rate of 1 $m^3$/sec at 150° C to measure the rate of oxidation of NO to $NO_2$. The intermittent frequency was altered to vary the average discharge current to establish the relationship between the average discharge current and NO oxidation rate (calculated from Equation [1] in Example 3). Table 7 shows the result.

Table 7

| Average current (µA) | NO oxidation rate (%) |
|---|---|
| 11.5 | 92 |
| 10.0 | 81 |
| 7.0 | 58 |
| 4.0 | 33 |
| 1.0 | 9 |

INDUSTRIAL APPLICABILITY

The present invention relates to a method of and an apparatus for oxidizing harmful substances, such as dioxins, in exhaust gases released from refuse incinerators, boilers, diesel engines, etc. The invention further relates to catalysts or catalyst carriers having discharge electrodes, and also to catalyst blocks comprising catalyst or catalyst carrier members having discharge electrodes, and a photocatalyst provided between these members and/or disposed externally thereof.

**Claims**

1. A catalyst or carrier having a discharge electrode and comprising a catalyst or carrier in the form of a plate or sheet, the electrode being provided on at least one surface of the catalyst or carrier plate or sheet and being in the form of dots, or a line or bar which may intersect itself.

2. A catalyst or carrier having a discharge electrode according to claim 1 wherein the electrode is one formed by applying an electrically conductive printing ink to at least one surface of the catalyst or carrier plate or sheet by printing, sintering a metal powder on the surface, or vapor-depositing or sputtering a metal onto the surface.

3. A catalyst or carrier having a discharge electrode according to claim 1 or 2 wherein the electrode is in the form of comb teeth.

4. A catalyst or carrier having a discharge electrode according to claim 3 wherein the comb-tooth electrode is formed on each of front and rear surfaces of the catalyst or carrier plate or sheet, and the rear and front electrodes are oriented in opposite directions to each other in an interdigital arrangement.

5.  A catalyst having a discharge electrode according to any one of claims 1 to 4 wherein the catalyst comprises a matrix in the form of a plate or sheet of preform prepared from ceramic fibers, and a catalyst substance or porous carrier particles dispersed and retained in the matrix among the ceramic fibers, the carrier particles having the catalyst substance supported thereon.

6.  A carrier having a discharge electrode according to any one of claims 1 to 4 wherein the carrier comprises a matrix in the form of a plate or sheet of preform prepared from ceramic fibers, and porous carrier particles dispersed and retained in the matrix among the ceramic fibers.

7.  A catalyst block having discharge electrodes and comprising a plurality of catalyst or carrier plates or sheets and each having an electrode formed on at least one surface thereof, the electrode being in the form of dots, or a line or bar which may intersect itself, and a photocatalyst interposed between the plates or sheets and/or disposed externally thereof.

8.  A catalyst block having discharge electrodes according to claim 7 wherein the catalyst plate or sheet having the electrode and the photocatalyst each comprise a matrix in the form of a plate or sheet of preform prepared from ceramic fibers, and a catalyst substance or porous carrier particles dispersed and retained in the matrix among the ceramic fibers, the carrier particles having the catalyst substance supported thereon.

9.  A catalyst block having discharge electrodes according to claim 7 or 8 wherein the electrode is formed by applying an electrically conductive printing ink to at least one surface of the catalyst or carrier plate or sheet by printing, sintering a metal powder on the surface, or vapor-depositing or sputtering a metal onto the surface.

10. A catalyst block having discharge electrodes according to any one of claims 7 to 9 wherein the electrode is in the form of comb teeth.

11. A catalyst block having discharge electrodes according to claim 10 wherein the comb-tooth electrode is formed on each of front and rear surfaces of the catalyst or carrier plate or sheet, and the rear and front electrodes are oriented in opposite directions to each other in an interdigital arrangement.

12. A catalyst block having discharge electrodes according to any one of claims 7 to 11 wherein the photocatalyst is a granular or particulate catalyst or in the form of a flat plate or corrugated plate.

13. A catalyst block having discharge electrodes according to any one of claims 7 to 12 wherein the catalyst or carrier plate or sheet having the electrode is a flat plate, and the photocatalyst is in the form of a corrugated plate.

14. A catalyst block having discharge electrodes according to any one of claims 7 to 12 wherein the flat catalyst or carrier plates having the electrode have ends projecting beyond a corrugated photocatalyst plate, and the electrodes are connected together at the projecting ends.

15. A method of using a catalyst or carrier having a discharge electrode according to any one of claims 1 to 6, or a catalyst block having discharge electrodes according to any one of claims 7 to 14 by applying a voltage of 3 to 50 kV per 10 mm of the electrode spacing across a pair of electrodes on the catalyst or carrier plates or sheets each having the electrode at 0.04 to 200 kHz to cause a discharge across the electrodes through the catalyst or carrier and thereby activate the catalyst or carrier plates or sheets.

16. A method of catalytic reaction of a gas by installing a catalyst or carrier having a discharge electrode according to any one of claims 1 to 6 or a catalyst block having discharge electrodes according to any one of claims 7 to 14 in a flow channel for the gas, and applying a voltage of 3 to 50 kV per 10 mm of the electrode spacing across a pair of electrodes at 0.04 to 200 kHz to cause a discharge across the electrodes through the catalyst or carrier and activate the catalyst or carrier, whereby components contained in the gas and to be treated are catalytically reacted.

17. A method of catalytic reaction according to claim 16 wherein the gas is a combustion exhaust gas, and by which dioxins in the gas are oxidized and decomposed, and nitrogen monoxide in the gas is oxidized.

18. A method of catalytic reaction according to claim 16 wherein the gas is a gas containing organic odor components and by which the odor components of the gas are oxidized and decomposed.

19. A method of decomposing dioxins by plasma discharge comprising filling a particulate catalyst exhibiting semiconductor characteristics into a space between a pair of electrodes, applying a voltage across the electrodes to cause plasma discharge between the catalyst particles, and passing an exhaust gas to be treated through a bed filled with the catalyst to decompose dioxins in the exhaust gas.

20. A method of decomposing dioxins according to claim 19 wherein the catalyst has photocatalyst activity.

21. A method of decomposing dioxins according to claim 19 wherein the catalyst is a titania catalyst.

22. A method of decomposing dioxins according to claim 19 wherein the catalyst comprises an anatase titania carrier and a thin titania layer having photocatalyst activity and coating the carrier.

23. A method of decomposing dioxins according to any one of claims 19 to 22 wherein the voltage is applied intermittently with high-frequency waves.

24. A method of decomposing dioxins according to claim 23 wherein the voltage is applied intermittently at a frequency of 40 Hz to 10 MHz.

25. A method of decomposing dioxins according to any one of claims 19 to 24 wherein the field intensity between the pair of electrodes is 0.5 to 50 kV/cm.

26. A method of removing dioxins according to any one of claims 19 to 25 wherein NO in the exhaust gas is converted to $NO_2$ at the same time.

27. A method of removing dioxins according to any one of claims 19 to 26 wherein hydrocarbons in the exhaust gas are converted to carbon dioxide at the same time.

28. An apparatus for decomposing dioxins by plasma discharge comprising a pair of electrodes arranged in an exhaust gas flue, a catalyst bed disposed between the pair of electrodes and comprising a particulate catalyst exhibiting semiconductor characteristics, and a power source for applying a voltage across the electrodes to cause plasma discharge between the catalyst particles and produce ultraviolet rays for the excitation of a photocatalyst, whereby dioxins in an exhaust gas flowing through the catalyst bed are decomposed.

29. An apparatus for decomposing dioxins according to claim 28 wherein the exhaust gas flue is provided with a dust removal device at a position upstream from the pair of electrodes.

30. An apparatus for decomposing dioxins according to claim 28 or 29 wherein the exhaust gas flue is provided with a denitration device at a position downstream from the pair of electrodes.

# Fig.1

EP 1 224 973 A1

# Fig.2

EP 1 224 973 A1

# Fig.3

Fig.4

Fig.5

Fig.6

(a)

(b)

(c)

Fig.7

Fig.9

# Fig.8

## (a)

## (b)

## Fig.10

### ( a )

### ( b )

## Fig.11

REACTIVE GAS

EXHAUST

ANALYZER SYSTEM

# Fig.12

# Fig.13

Fig.14

Fig.15

## Fig.16

## Fig.17

## Fig.18

## Fig.19

## Fig.20

## Fig.21

### ( a )

80

42

41

240

b

b

### ( b )

41

160

42

44

9

8

43

45

# INTERNATIONAL SEARCH REPORT

| International application No. |
|---|
| PCT/JP00/06043 |

**A. CLASSIFICATION OF SUBJECT MATTER**
  Int.Cl⁷   B01J 35/02, B01D 53/86, 53/94, B01J 19/24, 19/08

According to International Patent Classification (IPC) or to both national classification and IPC

**B. FIELDS SEARCHED**

Minimum documentation searched (classification system followed by classification symbols)
  Int.Cl⁷   B01J 21/00-38/74, B01D 53/32, 53/86, 53/94,
        B01J 19/00-19/32

Documentation searched other than minimum documentation to the extent that such documents are included in the fields searched
  Jitsuyo Shinan Koho        1926-1996    Toroku Jitsuyo Shinan Koho  1994-2000
  Kokai Jitsuyo Shinan Koho  1971-2000    Jitsuyo Shinan Keisai Koho  1996-2000

Electronic data base consulted during the international search (name of data base and, where practicable, search terms used)
  JICST FILE(JOIS)  AU: AKIRA MIZUNO*PHOTPCATALYST
                                (in Japanese)

**C. DOCUMENTS CONSIDERED TO BE RELEVANT**

| Category* | Citation of document, with indication, where appropriate, of the relevant passages | Relevant to claim No. |
|---|---|---|
| X<br>Y<br><br>A | JP, 8-105317, A (TONEN CORPORATION),<br>23 April, 1996 (23.04.96),<br>Claims; description, page 2, Column 2, Par. No. 11; page 3, Columns 3 to 4, Par. Nos. 16 to 17; page 3, Column 4, Par. Nos. 21 to 22   (Family: none) | 1-3,15-16<br>7,9-10,12,<br>15-18<br>4-6 |
| Y | JP, 6-312115, A (Takuma Co., Ltd.),<br>08 November, 1994 (08.11.94),<br>entire specification, Full text   (Family: none) | 17 |
| Y | JP, 7-47223, A (Mitsubishi Heavy Industries, Ltd.),<br>21 February, 1995 (21.02.95),<br>Claims; description, page 2, Column 2, Par. No.1<br>(Family: none) | 18 |
| Y<br><br>A | JP, 5-237337, A (Mitsui Engineering & Shipbuilding Co., Ltd.),<br>17 September, 1993 (17.09.93),<br>Claims; example   (Family: none) | 7,9-10,12,<br>15-18<br>8,11,13,14 |
| Y | JP, 11-156157, A (Sanki Eng. Co., Ltd.),<br>15 June, 1999 (15.06.99), | 19-30 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 December, 2000 (12.12.00) | 26 December, 2000 (26.12.00) |

| Name and mailing address of the ISA/<br>    Japanese Patent Office | Authorized officer |
|---|---|
| Facsimile No. | Telephone No. |

Form PCT/ISA/210 (second sheet) (July 1992)

**INTERNATIONAL SEARCH REPORT**

| International application No. |
|---|
| PCT/JP00/06043 |

C (Continuation).   DOCUMENTS CONSIDERED TO BE RELEVANT

| Category* | Citation of document, with indication, where appropriate, of the relevant passages | Relevant to claim No. |
|---|---|---|
| | entire specification, Full text    (Family: none) | |
| Y | JP, 6-15143, A (Mitsui Engineering & Shipbuilding Co., Ltd.),<br>25 January, 1994 (25.01.94),<br>Claims; description, page 2, Column 2, Par. No. 3;<br>page 3, Columns 3 to 4, Par. Nos. 16 to 17; page 4,<br>Column 6, Par. No. 22; Figs. 1, 4, 5    (Family: none) | 19-30 |
| Y | JP, 11-47558, A (Nitto Denko Corporation),<br>23 February, 1999 (23.02.99),<br>Claims; description, page 3, Column 3, Par. No. 9;<br>page 3, Column 4, Par. No. 13; Figs. 3, 4    (Family: none) | 19-30 |
| Y | JP, 11-128768, A (LG Electron. Inc.),<br>18 May, 1999 (18.05.99),<br>Claims; description, page 4, Column 5, Par. No. 19; page<br>4, Columns 5 to 6, Par. Nos. 22 to 25<br>& DE, 19838107, A1   & CN, 1210764, A<br>& KR, 99017057, A    & KR, 99017060, A<br>& AU, 9880840, A | 19-30 |
| Y | JP, 11-169645, A (Sekisui Chemical Co., Ltd.),<br>29 June, 1999 (29.06.99),<br>Claims; description, page 2, Column 1, Par. No. 1; page<br>2, Columns 1 to 2, Par. No. 5    (Family: none) | 19-30 |
| EX | JP, 2000-325735, A (Mitsubishi Heavy Industries, Ltd.),<br>28 November, 2000 (28.11.00),<br>Claims; description, pages 2 to 3, Columns 2 to 3, Par.<br>No. 1; page 5, Column 8, Par. No. 39; page 7, Columns 11<br>to 12, Par. No. 52; Fig. 6    (Family: none) | 19-29 |

Form PCT/ISA/210 (continuation of second sheet) (July 1992)

## INTERNATIONAL SEARCH REPORT

| International application No. |
|---|
| PCT/JP00/06043 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

The special technical feature of the inventions of claims 1-18 relates to a catalyst with a discharge electrode or carrier, a catalyst with discharge electrodes , or catalyst block with a discharge electrode comprising a carrier and photocatalyst and the method of its use. The special technical feature of the inventions of claims 19-30 relates to a method and device for decomposing dioxin by using a device fabricated by filling the space between a pair of electrodes with a granular catalyst exhibiting semiconductor characteristics. The structures of the electrodes of the two groups of inventions are quite different from each other. Therefore there is no technical relationship among these groups of inventions involving one or more of the same or corresponding special technical features, and consequently these groups of inventions are not so linked as to form a single inventive concept.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1992)